# EUROPEAN PATENT APPLICATION

(11) **EP 4 721 917 A1**
(43) Date of publication of application: **08.04.2026**
(21) Application number: 24845102.3
(22) Date of filing: 25.03.2024
(51) Int. Cl.: B23Q 17/00, G01M 1/38

(54) **METHOD FOR PROVIDING BALANCE CORRECTION CONDITION, BALANCE CORRECTION CONDITION PROVIDING DEVICE, AND BALANCE CORRECTION SYSTEM**

(30) Priority: 25.07.2023 JP 2023120392
(71) Applicant: IHI Corporation, Tokyo 135-8710 (JP)
(72) Inventor: Mukai,Takahiro, Tokyo 135-8710 (JP); Iwasaki, Takayuki, Tokyo 135-8710 (JP); Hasegawa, Masanobu, Tokyo 135-8710 (JP)
(74) Representative: TBK
(86) International application number: PCT/JP2024/011717
(87) International publication number: WO 2025/022717

(57) **Abstract**

A method of providing balance correction conditions includes a process of applying pre-correction balance information including a pre-correction unbalance amount and a pre-correction unbalance orientation of a work to correction condition acquisition information which derives a correction condition for correcting an unbalance of the work which is indicated by the pre-correction balance information, and obtaining correction conditions, and a process of updating the correction condition acquisition information using the pre-correction balance information and post-correction balance information including a post-correction unbalance amount and a post-correction unbalance orientation of the work machined based on the correction conditions.

## Description

### Technical Field

The present disclosure relates to a method for providing balance correction conditions, a device for providing balance correction conditions, and a balance correction system.

### Background Art

Patent Literature 1 describes a method and apparatus that enable highly accurate unbalance correction. In the method described in Patent Literature 1, influence coefficients are acquired by repeatedly cutting based on unbalance data, acquiring the unbalance data, and evaluating unbalance values.

### Citation List

### Patent Literature

[Patent Literature 1] Japanese Unexamined Patent Publication No. 2012-63257

### Summary of Invention

### Technical Problem

When a rotating body such as a turbine shaft has a so-called unbalance, the rotating body will vibrate as it rotates. Therefore, the magnitude and orientation of the unbalance are measured for each work. Next, machining conditions for the work are set based on the measurement results. Then, the work is machined to correct the unbalance according to the machining conditions.

Various conditions affect the machining to correct the unbalance. Due to these effects, the work may not be machined according to the machining conditions. This discrepancy between the machining conditions and the actual machining results is a factor that reduces the number of works that can be determined as good after one balance correction machining.

The present disclosure describes a method for providing balance correction conditions that can curb a decrease in the first run rate, a device for providing balance correction conditions, and a balance correction system.

### Solution to Problem

A method of providing balance correction conditions, which is an aspect of the present disclosure, includes a first step of applying pre-correction balance information including a pre-correction unbalance amount and a pre-correction unbalance orientation of a balance correction target to correction condition acquisition information which derives a correction condition for correcting an unbalance of the balance correction target which is indicated by the pre-correction balance information, and obtaining correction conditions, and a step of updating the correction condition acquisition information using the pre-correction balance information and post-correction balance information including a post-correction unbalance amount and a post-correction unbalance orientation of the balance correction target machined based on the correction conditions.

According to this method, the balance correction target is corrected based on the correction conditions obtained by the first step. The post-correction balance information is then obtained as a correction result. In the step of updating the correction condition acquisition information, the correction condition acquisition information for obtaining the correction conditions is updated using the post-correction balance information. In this way, it is possible to reflect an influence of the correction machining in setting of the correction conditions for next correction machining. As a result, a deviation between the correction conditions set in the first step and actual correction machining results can be reduced. Therefore, the number of balance correction targets determined as good by single balance correction machining can be increased, and a decrease in a first run rate can be curbed.

The correction condition acquisition information may include target machining amount information that defines a relationship between a target unbalance correction amount based on the pre-correction unbalance amount and a target machining amount corresponding to the target unbalance correction amount. The step of updating the correction condition acquisition information may include a step of updating the target machining amount information used in the first step to target machining amount information, in which a correction result of the balance correction target is reflected, by multiplying the target machining amount information by a target machining amount information correction coefficient obtained based on the pre-correction balance information and the post-correction balance information. According to this step, the target machining amount information can be suitably updated.

The step of updating the target machining amount information may include a step of updating the target machining amount information correction coefficient used when the target machining amount information is obtained in the first step to a target machining amount information correction coefficient, in which a correction result of the balance correction target is reflected, by multiplying the target machining amount information correction coefficient by a machining result reflection coefficient based on the pre-correction balance information and the post-correction balance information, and a step of updating the target machining amount information used when the target machining amount information is obtained in the first step to target machining amount information, in which a correction result of the balance correction target based on the correction conditions is reflected, by multiplying the target machining amount information by the target machining amount information correction coefficient in which the correction result of the balance correction target is reflected. This step also allows for suitable updating of the target machining amount information.

In the step of updating the target machining amount information, a first target machining amount information correction coefficient may be applied to a first target unbalance correction amount, and a second target machining amount information correction coefficient which is different from the first target machining amount information correction coefficient, may be applied to a second target unbalance correction amount which is different from the first target unbalance correction amount. According to the step, good correction conditions can be obtained.

The correction condition acquisition information may include a target unbalance correction amount based on the pre-correction unbalance amount and an angle correction amount to correct a target angle that defines an angle at which the target unbalance correction amount is given. The step of updating the correction condition acquisition information may include a step of updating the angle correction amount that is added to the pre-correction unbalance orientation to obtain the target angle. The step of updating the angle correction amount may include a step of updating the angle correction amount used when the target angle is obtained in the first step to an angle correction amount, in which a correction result of the balance correction target is reflected, by adding a machining result reflection term based on the pre-correction balance information and the post-correction balance information to the angle correction amount. According to this step, the angle correction amount can be suitably updated.

A device for providing balance correction conditions, which is another aspect of the present disclosure, includes a correction condition acquisition unit that applies pre-correction balance information including a pre-correction unbalance amount and a pre-correction unbalance orientation of a balance correction target to correction condition acquisition information which derives a correction condition for correcting an unbalance of the balance correction target which is indicated by the pre-correction balance information, and obtains correction conditions, and a correction condition acquisition information update unit that updates the correction condition acquisition information using the pre-correction balance information and post-correction balance information including a post-correction unbalance amount and a post-correction unbalance orientation of the balance correction target machined based on the correction conditions.

This device also reduces the deviation between the correction conditions set by the correction condition acquisition unit and actual results of the correction machining. Therefore, the number of balance correction targets determined as good by single balance correction machining can be increased, and decrease in the first run rate can be curbed.

A balance correction system, which is another form of the present disclosure, includes a balance measurement unit which obtains balance information including an unbalance amount and an unbalance orientation of a balance correction target, a balance correction condition providing unit which receives the balance information and outputs correction conditions for correcting an unbalance in the balance correction target, and a machining unit which receives the correction conditions and performs machining to correct the unbalance of the balance correction target The balance correction condition providing unit includes a correction condition acquisition unit that applies pre-correction balance information including a pre-correction unbalance amount and a pre-correction unbalance orientation of a balance correction target to correction condition acquisition information which derives a correction condition for correcting an unbalance of the balance correction target which is indicated by the pre-correction balance information, and obtains correction conditions, and a correction condition acquisition information update unit that updates the correction condition acquisition information using the pre-correction balance information and post-correction balance information including a post-correction unbalance amount and a post-correction unbalance orientation of the balance correction target machined based on the correction conditions.

The system is equipped with a balance correction condition providing unit corresponding to the device for providing balance correction conditions described above. Therefore, as with the device for providing balance correction conditions, the number of balance correction targets determined to be good by one balance correction machining can be increased, and thus the decrease in the first run rate can be curbed.

### Advantageous Effects of Invention

According to the method for providing balance correction conditions, the device for providing balance correction conditions, and the balance correction system of the present disclosure, it is possible to curb a decrease in a first run rate.

### Brief Description of Drawings

FIG. 1 is a block diagram of a balance correction system of an embodiment.
FIG. 2 is a flow diagram showing main processes of a balance correction method.
FIG. 3 is a graph showing a relationship between a work and correction condition acquisition information.
FIG. 4 is a diagram showing another example of the relationship between the work and the correction condition acquisition information.
FIG. 5 is a flow diagram showing a process of acquiring correction conditions.
FIG. 6 is a flow diagram showing a process of updating a correction curve of the correction condition acquisition information.
FIG. 7 is a flow diagram showing a process of updating an angle correction amount of the correction condition acquisition information.
FIG. 8 is a diagram showing an example of the correction curve.
FIG. 9 shows a physical configuration of a computer, which is a device for providing balance correction conditions.
FIG. 10(a) is a functional block diagram of a correction condition acquisition unit. FIG. 10(b) is a functional block diagram of a target machining amount acquisition unit. FIG. 10(c) is a functional block diagram of a target angle acquisition unit.
FIG. 11 is a functional block diagram of a correction condition acquisition information update unit.
FIG. 12 is a functional block diagram of a correction curve calculation unit.
FIG. 13 is a functional block diagram of an angle correction amount calculation unit.
FIG. 14 is a diagram showing a correction curve of a modified example.
FIG. 15 is a flow diagram showing an example of a process of obtaining the correction curve for the modified example.

### Description of Embodiments

Hereinafter, a method for providing balance correction conditions, a device for providing balance correction conditions, and a balance correction system according to the present disclosure will be described in detail with reference to the accompanying drawings. In the description of the drawings, the same elements are designated by the same reference signs, and duplicate description will be omitted.

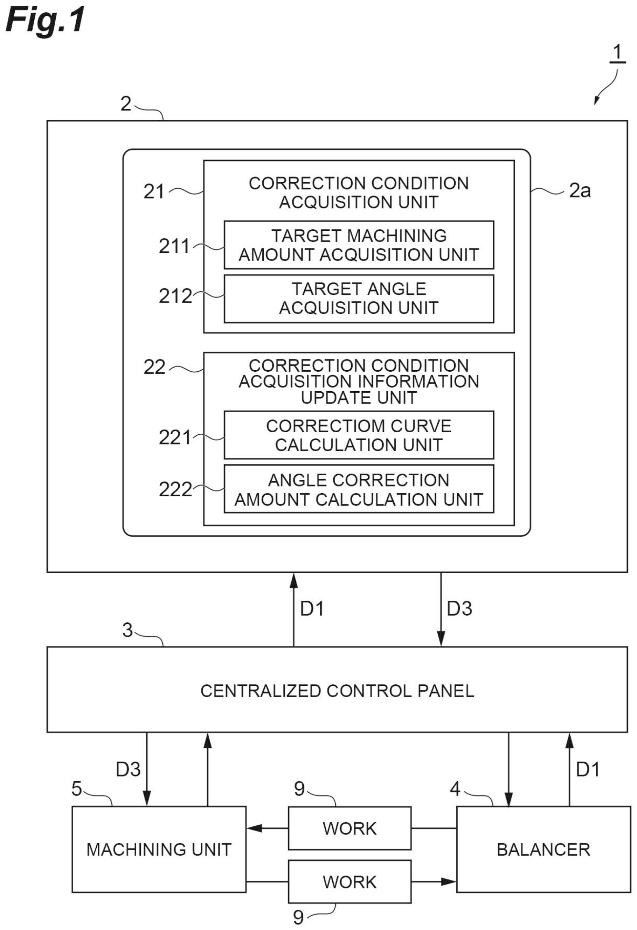

As shown in FIG. 1, the balance correction system 1 corrects an unbalance of a work 9 (a balance correction target) which is a rotating body. In more detail, the balance correction system 1 measures the unbalance and performs correction machining based on measurement results so that a magnitude of the unbalance of the work 9 becomes equal to or less than a certain value.

The balance correction system 1 includes a device 2 for providing balance correction conditions (a balance correction condition providing unit), a centralized control panel 3, a balancer 4 (a balance measurement unit), and a machining unit 5 (a machining unit). The balancer 4 acquires information on the unbalance of the work 9 through measurement. In the following description, the information on the unbalance of the work 9 acquired by the balancer 4 is referred to as a "balance information." The balance information is provided to the device 2 for providing balance correction conditions via the centralized control panel 3. The device 2 for providing balance correction conditions determines machining conditions for correction machining using the balance information. The device 2 for providing balance correction conditions corrects the information for determining the machining conditions based on a correction history of the work 9. In the following description, the machining conditions for correction machining determined by the device 2 for providing balance correction conditions are referred to as "correction conditions D3." Information for determining the machining conditions based on the correction history of the work 9 is referred to as "correction condition acquisition information D2." The correction conditions D3 are provided to the machining unit 5 via the centralized control panel 3. The work 9 is removed from the balancer 4 and installed in the machining unit 5. The work 9 is installed and the machining unit 5, which has received the correction conditions D3, performs correction machining on the work 9 according to the correction conditions D3.

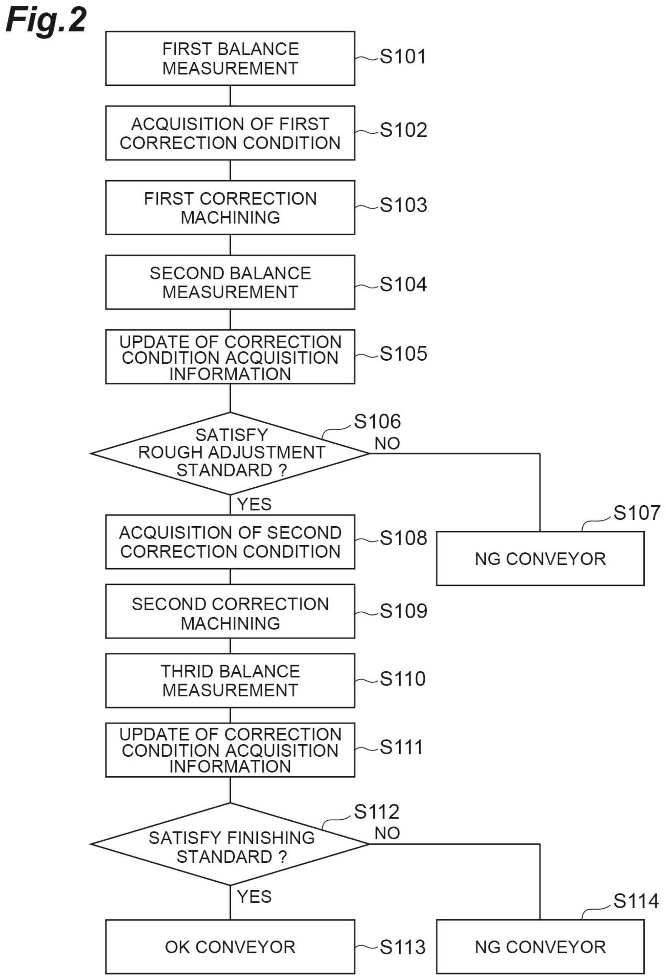

FIG. 2 is a flow diagram schematically showing a process of correcting the balance of the work 9 implemented by the balance correction system 1.

First, the balancer 4 performs a first balance measurement on the work 9 (S101). Next, first correction conditions D3 for the work 9 are acquired by the device 2 for providing balance correction conditions (S102). Next, first correction machining to the work 9 is performed by the machining unit 5 (S103). Next, the balancer 4 performs a second balance measurement on the corrected work 9 (S104). The correction condition acquisition information D2 may be updated by the device 2 for providing balance correction conditions to obtain the correction conditions D3 (S105). Details of the correction condition acquisition information D2 are described below. Then, whether results of the second balance measurement satisfy a rough adjustment standard is determined (S106). When the rough adjustment standard is satisfied, the process moves to a finishing adjustment process (S108-S112). When the rough adjustment standard is not satisfied, the work 9 is excluded (S107) as a defective product that cannot satisfy required unbalance conditions through the correction machining.

Next, second correction conditions D3 for the work 9 are acquired by the device 2 for providing balance correction conditions (S108). Next, second correction machining of the work 9 is performed by the machining unit 5 (S109). Next, the balancer 4 performs a third balance measurement on the corrected work 9 (S110). Here, the correction condition acquisition information D2 for obtaining the correction conditions D3 may be updated by the device 2 for providing balance correction conditions (S111). Then, whether results of the second balance measurement satisfy a finishing standard is determined (S112). When the finishing adjustment standard is satisfied, the product is determined as good and moved to a next manufacturing process (S113). When the finishing adjustment standard is not satisfied, the product is excluded as defective (S114).

In this specification, a "first run rate" may be defined as a value in which the total number of works 9 for which the first balance measurement (S101) was performed is a denominator and the number of works 9 that were determined as good and transferred to the next manufacturing process (S113) is a numerator. In other words, the work 9 that is determined as good without requiring correction machining as a result of the first balance measurement (S101) may also be treated as good when the first run rate is calculated.

The process of acquiring the correction conditions D3 (S102, S108) will be described in detail, while presenting the balance information of the work 9. In the following description, a variable "n" is used. In the following description, the work 9 is described as a "work 9(n)" or the like when the work 9 is distinguished. For example, a "work 9(n)" and a "work 9(n+1)" are different.

For example, an unbalance of a certain work 9 may be expressed as "an unbalance orientation is 30 degrees from a reference angle and an unbalance amount is 100 mg." In other words, balance information indicating a state of the unbalance of the work 9 includes the unbalance orientation and the unbalance amount. The correction conditions D3 for correction machining to correct the unbalance of the work 9 may be expressed as "cut by a target machining amount of 0.1 mm in a direction of a target angle that is 30 degrees from the reference angle." The correction conditions D3 for the work 9 includes a target machining amount D31 and a target angle D32.

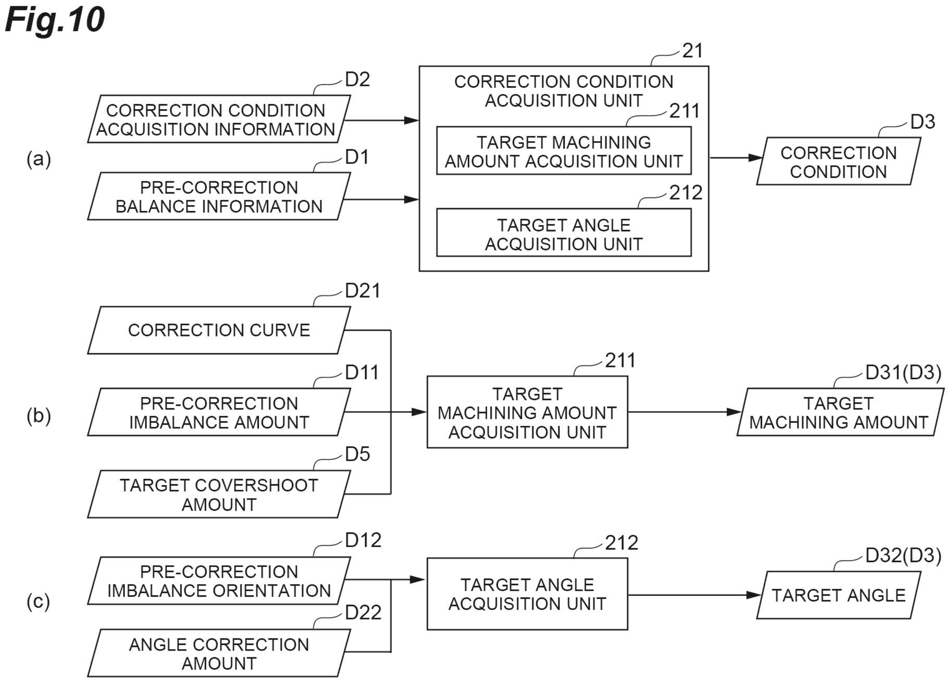

The correction conditions D3 are determined based on the balance information. For example, from the unbalance amount indicating "100 mg," "a target machining amount of 0.1 mm" is derived. For this derivation, the correction condition acquisition information D2 is used. The correction condition acquisition information D2 converts the unbalance amount into the target machining amount D31 (refer to FIG. 10(b)) and the unbalance orientation into the target angle D32 (refer to FIG. 10(c)).

Ideally, the machining unit 5 that performs the correction machining should exactly match a state of a certain work 9 when it is machined and a state of another work 9 when it is machined. In practice, however, when, for example, the machining unit 5 uses a grinding wheel to grind the work 9, the grinding wheel is also gradually worn down as the work 9 is ground. In other words, when a predetermined machining amount is input to the machining unit 5, a result of correction machining of one work 9 may be different from a result of machining another work 9. Similarly, the unbalance orientation measured by the balancer 4 may include a certain error. When the unbalance orientation including a measurement error is used as it is as the target angle D32, it may not be possible to obtain a sufficient result of correcting the unbalance.

Therefore, the correction condition acquisition information D2 has a function of automatically correcting uncertain factors that affect the conversion of the balance information into the correction conditions D3. Specifically, the correction condition acquisition information D2 has a function of correcting an effect of a change in the amount of machining caused by wear of the grinding wheel and a function of correcting an effect caused by instability in installation in the balancer 4 and the machining unit 5 and/or an effect caused by the measurement error of the unbalance orientation by the balancer 4.

The correction condition acquisition information D2 compensates for the effect of the change in the amount of machining using the balance information obtained before correction machining (hereinafter, referred to as "pre-correction balance information D1") and the balance information obtained after correction machining (hereinafter, referred to as "post-correction balance information D4") for a certain work 9.

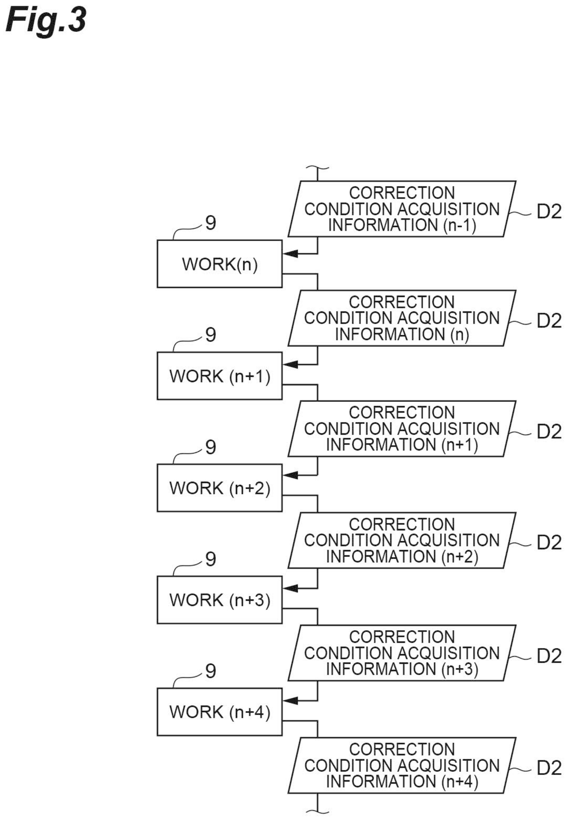

FIG. 3 shows an example of a relationship between works 9(n) to 9(n+4) and correction condition acquisition information D2(n) to D2(n+4). The correction condition acquisition information D2(n) is obtained using the pre-correction balance information D1 and post-correction balance information D4 for the work 9(n). An operation of obtaining the correction condition acquisition information D2(n) using the pre-correction balance information D1 and the post-correction balance information D4 is called "updating the correction condition acquisition information D2(n)." The operation of obtaining the correction condition acquisition information D2(n) does not generate new correction condition acquisition information D2(n). The operation of obtaining the correction condition acquisition information D2(n) updates the contents of the correction condition acquisition information D2(n-1) by reflecting the correction results of the work 9(n) in already existing correction condition acquisition information D2(n-1).

When the correction machining of a work 9(n+1) is performed, the correction conditions D3 of the work 9(n+1) are obtained using the pre-correction balance information D1 of the work 9(n+1) and the correction condition acquisition information D2(n). The correction condition acquisition information D2(n) is updated to the correction condition acquisition information D2(n+1) using the pre-correction balance information D1 and post-correction balance information D4 for the work 9(n+1). As a result, a result of the correction of one work 9(n) is reflected in the correction machining of the next work 9(n+1).

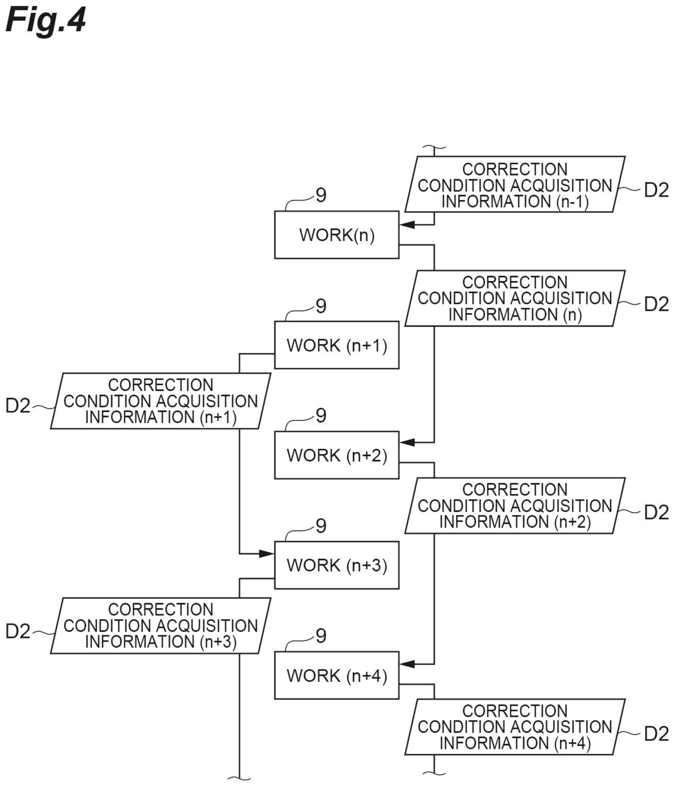

The correction condition acquisition information D2(n) in which the result of correction of the work 9(n) is reflected does not need to be applied to the machining of the next work 9(n+1). As shown in FIG. 4, the correction condition acquisition information D2(n) may also be applied to the machining of a work 9(n+2).

### <Method for obtaining balance correction information>

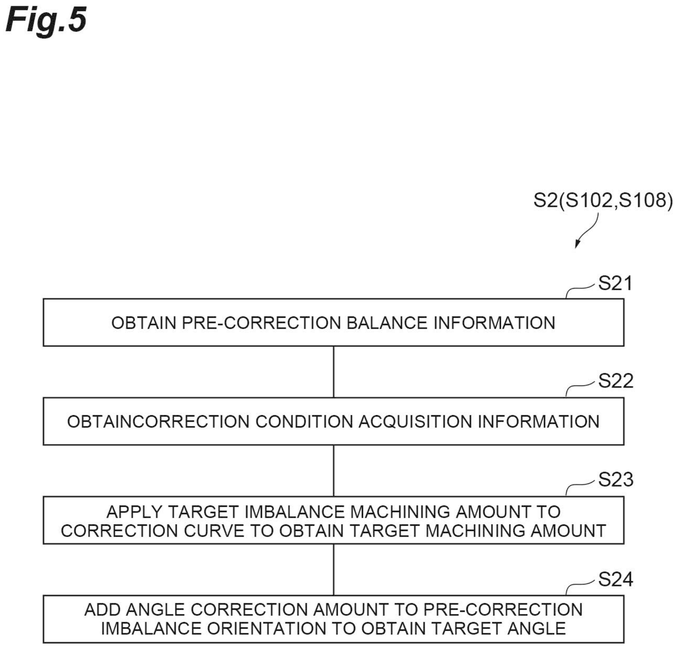

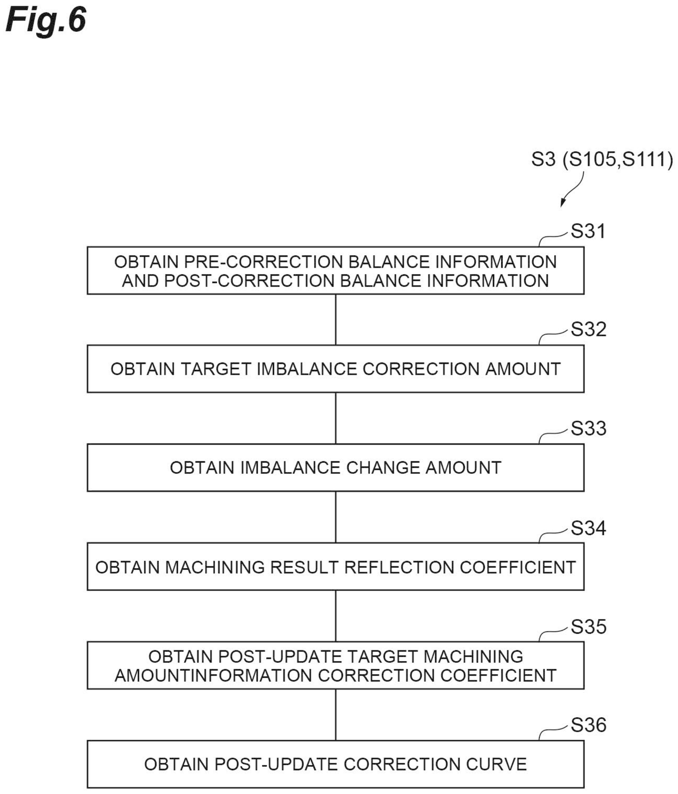

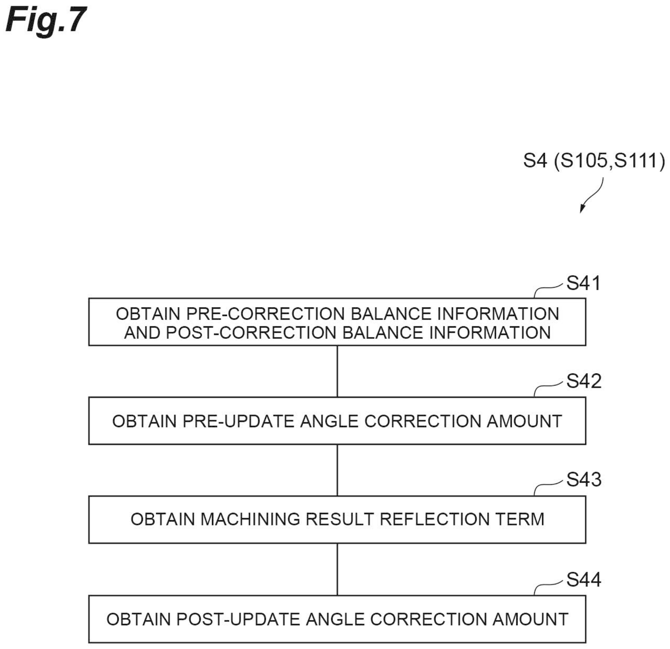

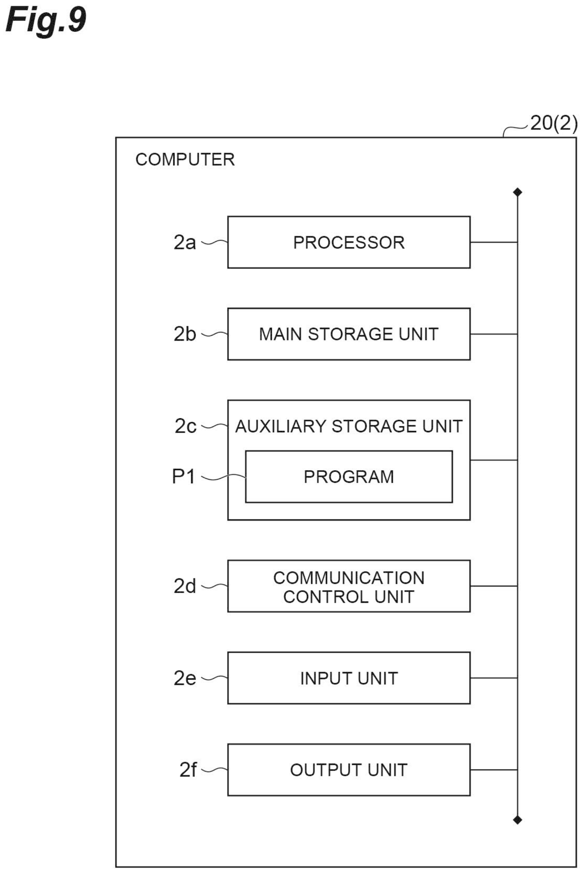

A method for providing the balance correction conditions D3 will be described in detail below with reference to FIGS. 5, 6 and 7. The method for providing the balance correction conditions D3 is performed by a processor 2a provided in a computer 20 (refer to FIG. 9) which constitutes the device 2 for providing balance correction conditions. A process S2 of obtaining the correction conditions D3 shown in FIG. 5 corresponds to the processes S102 and S108 shown in FIG. 2. Processes S3 and S4 of updating the correction condition acquisition information D2 shown in FIGS. 6 and 7 correspond to the processes S105 and S111 shown in FIG. 2.

### <Process of obtaining correction conditions D3>

In the process (S2: a first process) of obtaining the correction conditions shown in FIG. 5, the pre-correction balance information D1 including a pre-correction unbalance amount and a pre-correction unbalance orientation in the work 9 is applied to the correction condition acquisition information D2 that derives the correction conditions D3 for correcting the unbalance of the work 9 indicated by the pre-correction balance information D1. As a result, the correction conditions D3 may be obtained.

In more detail, first, the processor 2a obtains the pre-correction balance information D1 (S21). The pre-correction balance information D1 may be transmitted from the balancer 4 via the centralized control panel 3 and then stored in a main storage unit 2b of the computer 20. The processor 2a obtains the pre-correction balance information D1 from the main storage unit 2b. Next, the processor 2a obtains the correction condition acquisition information D2 (S22). The correction condition acquisition information D2 is stored in the main storage unit 2b of the computer 20. The processor 2a obtains the correction condition acquisition information D2 from the main storage unit 2b.

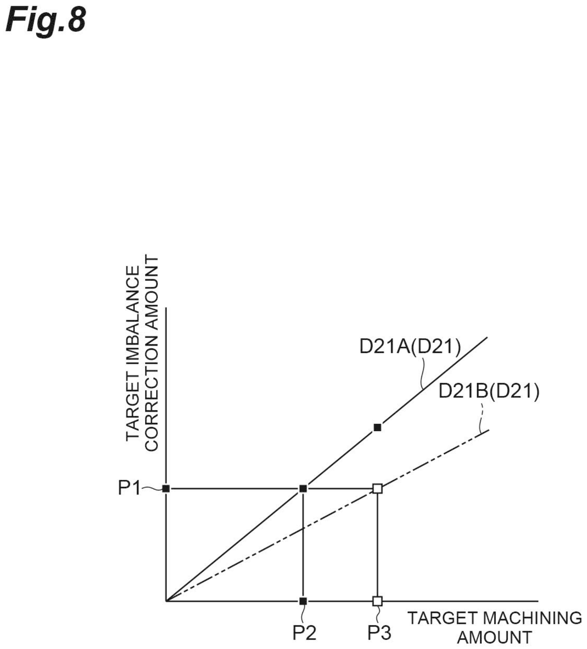

Next, a target machining amount D31 is obtained (S23). The processor 2a applies a target unbalance correction amount to a correction curve D21 (refer to FIG. 8) to obtain the target machining amount D31. For example, the target unbalance correction amount may be defined as a sum of a target overshoot amount D5 and a pre-correction unbalance amount.

FIG. 8 shows an example of the correction curve D21 (target machining amount acquisition information). As shown in FIG. 8, the correction curve D21 is information showing a relationship between the target machining amount D31 and the target unbalance correction amount. The correction curve D21 is an example of the target machining amount acquisition information. The target machining amount acquisition information may be in the form of a graph as shown in FIG. 8, which shows the relationship between the target machining amount D31 and the target unbalance correction amount. The target machining amount acquisition information may be a database in which the target machining amount D31 corresponding to the target unbalance correction amount is defined. The target machining amount acquisition information may be a function with the target unbalance correction amount as an independent variable and the target machining amount D31 as a dependent variable. As shown in FIG. 8, when there is a certain target unbalance correction amount (P1), it is understood that the target machining amount D31 (P2) is sufficient.

Next, the target angle D32 is obtained (S24). The processor 2a adds an angle correction amount D22 to the pre-correction unbalance orientation to obtain the target angle D32 (refer to FIG. 10(c)). The angle correction amount D22 is a term to compensate for errors caused by the installation of the work 9 and the measurement of the unbalance orientation.

By performing the above processes S21 to S24, the correction conditions D3 can be obtained.

### <Process of updating correction condition acquisition information D2>

The process of updating the correction condition acquisition information D2 (S105, S111: a second process) updates the correction condition acquisition information D2 using the pre-correction balance information D1 and the post-correction balance information D4 including the post-correction unbalance amount and the post-correction unbalance orientation in the work 9 machined based on the correction conditions D3. The process of updating the correction condition acquisition information D2 includes a process S3 of updating the correction curve D21 and a process S4 of updating the angle correction amount D22.

### <Process of updating the correction condition acquisition information D2: updating the correction curve D21>.

As shown in FIG. 6, the processor 2a first obtains the pre-correction balance information D1 and the post-correction balance information D4 from the main storage unit 2b (S31). Next, the processor 2a obtains the target unbalance correction amount (S32). As already described, the target unbalance correction amount may be defined as the sum of the pre-correction unbalance amount and the target overshoot amount D5. Next, the processor 2a obtains an unbalance change amount (S33). The unbalance change amount is an unbalance amount changed by the correction machining. The processor 2a obtains the unbalance change amount with calculation using the pre-correction unbalance amount, the pre-correction unbalance orientation, the post-correction unbalance amount, and the post-correction unbalance orientation. Next, the processor 2a obtains a machining result reflection coefficient (S34). The machining result reflection coefficient is used to reflect the correction result in the correction curve D21 (the target machining amount acquisition information). The machining result reflection coefficient may be calculated from the correction history of the work (n) in which the correction machining was performed. The processor 2a multiplies the machining result reflection coefficient by a pre-update correction curve correction coefficient D23 (S35). The correction curve correction coefficient D23 is used to correct the correction curve D21. Since the correction curve correction coefficient D23 is a coefficient based on the machining result reflection coefficient calculated from the correction history, so it may also be referred to as a learning coefficient. The correction of the correction curve D21 with the correction curve correction coefficient D23 may also be referred to as a coefficient shift. The processor 2a multiplies a pre-update correction curve D21 by a post-update correction curve correction coefficient D23, thereby updating the pre-update correction curve D21A to the post-update correction curve D21B (S36). The processor 2a multiplies the pre-update correction curve D21A by the machining result reflection coefficient, thereby obtaining the post-update correction curve D21B (refer to FIG. 8).

FIG. 8 shows the pre-update correction curve D21A and the post-update correction curve D21B. The target machining amount D31 (P3) corresponding to the predetermined target unbalance correction amount obtained based on the post-update correction curve D21B is larger than the target machining amount D31 (P2) corresponding to the predetermined target unbalance correction amount (P1) obtained based on the pre-update correction curve D21A. In other words, it may be considered that a difference in the target machining amount D31 is due to a degree of wear of the grinding wheel. Therefore, according to the post-update correction curve D21B, the correction conditions D3 may be suitably set for correction machining using a grinding wheel with a large amount of wear.

The correction curve correction coefficient (a correction coefficient for the target amount information) for updating the correction curve D21 may additionally include another coefficient in addition to the machining result reflection coefficient described above. For example, it may include a grinding wheel coefficient defined according to the number of times the grinding wheel is used. In addition, it may include an operator coefficient that can be defined arbitrarily by an operator. When these coefficients are used, the machining result reflection coefficient, the grinding wheel coefficient, and the operator coefficient may be successively multiplied with respect to the pre-update correction curve D21A. Upper and lower limits may be set for the correction curve correction coefficients, and the like

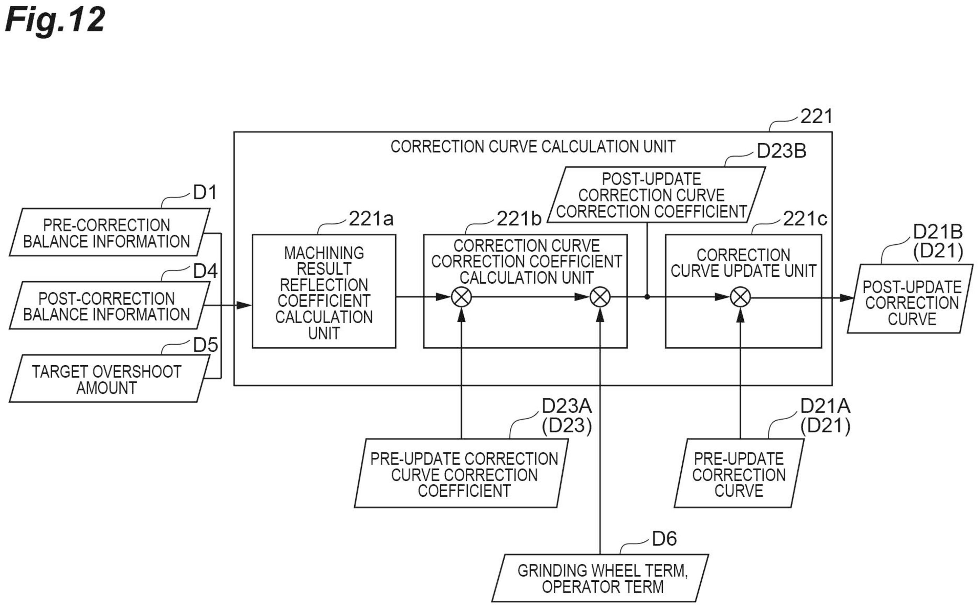

When the correction curve correction coefficient D23 is updated (refer to FIG. 12), some limitations exemplified below may be taken into account.

The post-correction balance information D4 may include abnormal values or variations. Therefore, a relaxation coefficient may be introduced to curb sudden changes in the correction curve correction coefficient D23 due to the abnormal values or variations. The relaxation coefficient is a value between 0 and 1.

The correction curve correction coefficient D23 may accumulate errors. Therefore, the correction curve correction coefficient does not need to be updated when the following conditions are satisfied For example, the following conditions may be exemplified as conditions for determining that the correction curve correction coefficient D23 is not to be updated.

Limit values are set for the unbalance amount, and the unbalance amount does not fall within a range indicated by the limit values.

Limit values are set for the correction curve correction coefficient D23, and the correction curve correction coefficient D23 does not fall within a range indicated by the limit values.

A correction range of finishing correction interferes with a correction range of rough correction.

### <Process of updating correction condition acquisition information D2: updating angle correction amount D22>.

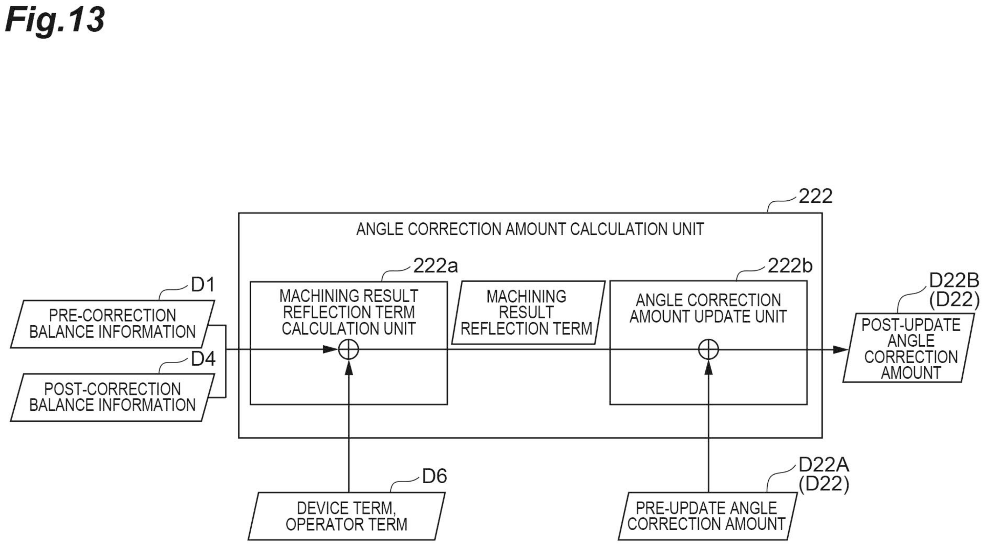

As shown in FIG. 7, the processor 2a first obtains the pre-correction balance information D1 and the post-correction balance information D4 from the main storage unit 2b (S41). Next, the processor 2a obtains a pre-update angle correction amount D22A (refer to FIG. 13) from the main storage unit 2b (S42). Next, the processor 2a obtains a machining result reflection term (S43). The machining result reflection term is a term to reflect the correction result to the pre-update angle correction amount D22A. The machining result reflection term can be calculated from the correction history of the work 9 in which the correction machining was performed. Specifically, the processor 2a obtains the machining result reflection term with calculation using the pre-correction unbalance amount, the pre-correction unbalance orientation, the post-correction unbalance amount, and the post-correction unbalance orientation. The processor 2a obtains a post-update angle correction amount D22B (S44). The processor 2a adds the machining result reflection term to the pre-update angle correction amount D22A to obtain the post-update angle correction amount D22B (refer to FIG. 13).

The term for updating the angle correction amount D22 may additionally include another term in addition to the machining result reflection term described above. For example, it may include a unique device term set for each of the machining units 5. It may include an operator term that may be defined arbitrarily by an operator. When these terms are used, the machining result reflection term, the device term, and the operator term may be added sequentially to the pre-update angle correction amount D22A.

When the angle correction amount D22 is updated, some limitations exemplified below may be taken into account, as with the correction curve correction coefficient D23.

The angle correction amount D22 may include abnormal values or variations. A relaxation coefficient may be introduced to curb sudden changes in the angle correction amount D22 due to the abnormal values or variations. The relaxation coefficient is a value between 0 and 1.

The angle correction amount D22 may accumulate errors. Therefore, the angle correction amount D22 does not need to be updated when the following conditions are satisfied. For example, the following conditions may be exemplified as conditions for determining that the angle correction amount D22 is not to be updated.

Limit values are set for the unbalance amount, and the unbalance amount does not fall within a range indicated by the limit values.

Limit values are set for an absolute value of a deviation of the angle correction amount D22, and those for which the absolute value of the deviation does not fall within a range indicated by the limit values.

A correction range of finishing correction interferes with a correction range of rough correction.

Maximum and minimum values may be set for the angle correction amount D22. In other words, a limitation may be placed on a range of the angle correction amount D22.

### <Device 2 for providing balance correction conditions>

Next, the device 2 for providing balance correction conditions that performs the method of providing the balance correction information described above will be described. As already described, the method of providing balance correction information is performed by the processor 2a of the computer 20. The device 2 for providing balance correction conditions is physically the computer 20. Then, the processor 2a executes a program defining the processes S2, S3, and S4 to realize the device 2 for providing balance correction conditions, which is configured of several functional components.

FIG. 9 is a block diagram showing a physical configuration of the computer 20. The computer 20 has a processor 2a which is a central machining unit (CPU), a main storage unit 2b, an auxiliary storage unit 2c, a communication control unit 2d, an input unit 2e, and an output unit 2f. The device 2 for providing balance correction conditions is configured of one or more computers 20 configured of the hardware and software such as programs.

When the device 2 for providing balance correction conditions is configured of a plurality of computers 20, the computers 20 may be connected locally or via a communication network such as the Internet or an intranet. This connection logically constitutes one device 2 for providing balance correction conditions.

The processor 2a executes an operating system or an application program. The main storage unit 2b is configured of a read only storage unit (ROM) and a random access storage unit (RAM). The auxiliary storage unit 2c is a storage medium configured of a hard disk, a flash memory, and the like. The auxiliary storage unit 2c generally stores a larger amount of data than the main storage unit 2b. At least a part of each of the units that constitute the device 2 for providing balance correction conditions is realized by the auxiliary storage unit 2c. At least some of the units that constitute the device 2 for providing balance correction conditions may be realized by the communication control unit 2d. The input unit 2e is configured of a keyboard, a mouse, a touch panel, a microphone for voice input, and the like. The output unit 2f is configured of a display, a printer, and the like. For example, the device 2 for providing balance correction conditions may display the pre-correction balance information D1, the post-correction balance information D4, the correction conditions D3 and the like on a display or the like.

The auxiliary storage unit 2c stores in advance a program P1 that provides the balance correction conditions D3 and data necessary for machining. The program P1 causes the computer 20 to execute each functional element of the device 2 for providing balance correction conditions. For example, the program P1 is read by the processor 2a or the main storage unit 2b so that at least one of the processor 2a, the main storage unit 2b, the auxiliary storage unit 2c, the communication control unit 2d, the input unit 2e, and the output unit 2f is operated. For example, the program P1 reads and writes data from and to the main storage unit 2b and the auxiliary storage unit 2c.

The program P1 may be provided in the form of being recorded on a tangible recording medium such as a CD-ROM, a DVD-ROM, or a semiconductor memory. The program P1 may be provided as a data signal via a communication network.

As shown in FIG. 1, the device 2 for providing balance correction conditions includes a correction condition acquisition unit 21 and a correction condition acquisition information update unit 22. The correction condition acquisition unit 21 performs the operation defined in the process S2. The correction condition acquisition information update unit 22 performs the operations defined in the processes S3 and S4.

### <Correction condition acquisition unit 21>.

As shown in FIG. 10(a), the correction condition acquisition unit 21 accepts the pre-correction balance information D1 and the correction condition acquisition information D2. The correction condition acquisition unit 21 calculates the correction conditions D3 based on the pre-correction balance information D1 and the correction condition acquisition information D2. The correction condition acquisition unit 21 outputs the correction conditions D3. The correction condition acquisition unit 21 performs the processes S21, S22, S23, and S24 shown in the flowchart in FIG. 5. The correction condition acquisition unit 21 includes a target machining amount acquisition unit 211 and a target angle acquisition unit 212.

As shown in FIG. 10(b), the target machining amount acquisition unit 211 accepts the pre-correction unbalance amount D11 and the target overshoot amount D5. The target machining amount acquisition unit 211 reads the correction curve D21. The target machining amount acquisition unit 211 calculates the target unbalance correction amount based on the pre-correction unbalance amount D11 and the target overshoot amount D5, and then obtains the target machining amount D31 by applying the target unbalance correction amount to the correction curve D21. The target machining amount acquisition unit 211 outputs the target machining amount D31. The target machining amount acquisition unit 211 performs the process S23 shown in the flowchart in FIG. 5.

As shown in FIG. 10(c), the target angle acquisition unit 212 accepts the pre-correction unbalance orientation D12. The target angle acquisition unit 212 reads the angle correction amount D22. The target angle acquisition unit 212 obtains the target angle D32 based on the pre-correction unbalance orientation D12 and the angle correction amount D22. The target angle acquisition unit 212 outputs the target angle D32. The target angle acquisition unit 212 performs the process S24 shown in the flowchart in FIG. 5.

### <Correction condition acquisition information update unit 22>

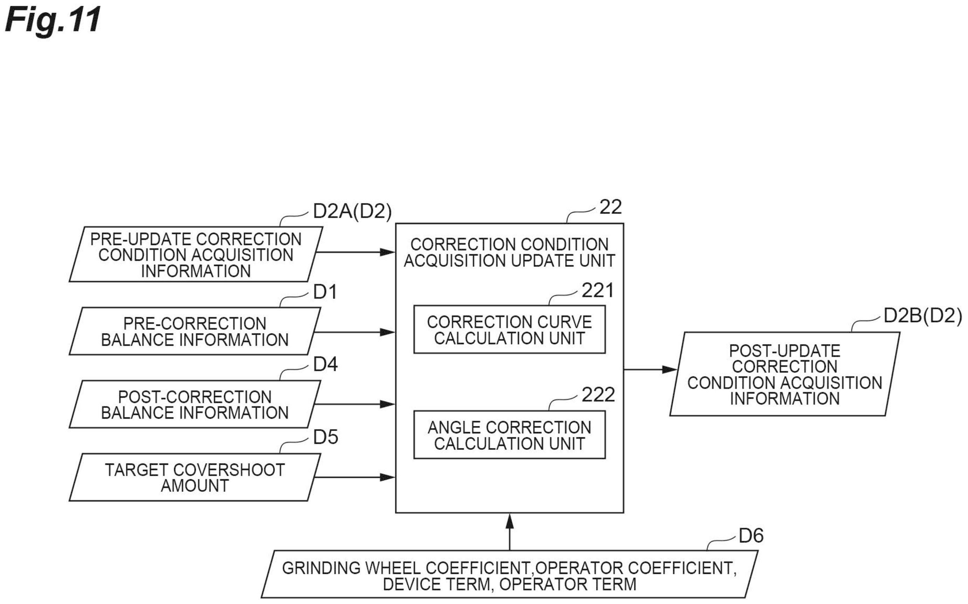

As shown in FIG. 11, the correction condition acquisition information update unit 22 accepts the pre-correction balance information D1, the post-correction balance information D4, the target overshoot amount D5, and the pre-update correction condition acquisition information D2A. The correction condition acquisition information update unit 22 may accept an auxiliary term D6 which includes the grinding wheel coefficient, the operator coefficient, the device term, and the operator term. The correction condition acquisition information update unit 22 updates the pre-update correction condition acquisition information D2A to the post-update correction condition acquisition information D2B using the pre-correction balance information D1, the post-correction balance information D4, the target overshoot amount D5. The correction condition acquisition information update unit 22 outputs the post-update correction condition acquisition information D2B. The correction condition acquisition information update unit 22 performs the process S3 shown in the flowchart in FIG. 6 and the process S4 shown in the flowchart in FIG. 7. The correction condition acquisition information update unit 22 includes a correction curve calculation unit 221 and an angle correction amount calculation unit 222.

As shown in FIG. 12, the correction curve calculation unit 221 accepts the pre-correction balance information D1, the post-correction balance information D4, and the target overshoot amount D5. The correction curve calculation unit 221 reads the pre-update correction curve correction coefficient D23A and the pre-update correction curve D21A. The correction curve calculation unit 221 updates the pre-update correction curve D21A to the post-update correction curve D21B using the pre-correction balance information D1, the post-correction balance information D4, and the target overshoot amount D5. The correction curve calculation unit 221 outputs the post-update correction curve D21B. The correction curve calculation unit 221 performs the processes S31 to S36 shown in the flowchart in FIG. 6. The correction curve calculation unit 221 includes a machining result reflection coefficient calculation unit 221a, a correction curve correction coefficient calculation unit 221b, and a correction curve update unit 221c.

The machining result reflection coefficient calculation unit 221a accepts the pre-correction balance information D1, the post-correction balance information D4, and the target overshoot amount D5. The machining result reflection coefficient calculation unit 221a calculates the machining result reflection coefficient based on the pre-correction balance information D1, the post-correction balance information D4, and the target overshoot amount D5. The machining result reflection coefficient calculation unit 221a provides the machining result reflection coefficient to the correction curve correction coefficient calculation unit 221b.

The correction curve correction coefficient calculation unit 221b accepts the machining result reflection coefficients and the pre-update correction curve correction coefficient D23A. The correction curve correction coefficient calculation unit 221b multiplies the machining result reflection coefficient by the pre-update correction curve correction coefficient D23A, thereby updating the pre-update correction curve correction coefficient D23A to the post-update correction curve correction coefficient D23B. The correction curve correction coefficient calculation unit 221b provides the post-update correction curve correction coefficient D23B to the correction curve update unit 221c. The correction curve correction coefficient calculation unit 221b may accept an auxiliary term D6 including the grinding wheel coefficient and the operator coefficient and provide the post-update correction curve correction coefficient D23B, which is further corrected by the grinding wheel coefficient and the operator coefficient, to the correction curve update unit 221c.

The correction curve update unit 221c accepts the post-update correction curve correction coefficient D23B and the pre-update correction curve D21A. The correction curve update unit 221c multiplies the pre-update correction curve D21A by the post-update correction curve correction coefficient D23B, thereby obtaining the post-update correction curve D21B. The correction curve update unit 221c outputs the post-update correction curve D21B.

As shown in FIG. 13, the angle correction amount calculation unit 222 accepts the pre-correction balance information D1 and the post-correction balance information D4. The angle correction amount calculation unit 222 reads the pre-update angle correction amount D22A. The angle correction amount calculation unit 222 updates the pre-update angle correction amount D22A to the post-update angle correction amount D22B using the pre-correction balance information D1 and the post-correction balance information D4. The angle correction amount calculation unit 222 outputs the post-update angle correction amount D22B. The angle correction amount calculation unit 222 performs the processes S41 to S44 shown in the flowchart in FIG. 7. The angle correction amount calculation unit 222 includes a machining result reflection term calculation unit 222a and an angle correction amount update unit 222b.

The machining result reflection term calculation unit 222a accepts the pre-correction balance information D1 and the post-correction balance information D4. The machining result reflection term calculation unit 222a calculates a machining result reflection term based on the pre-correction balance information D1 and the post-correction balance information D4. The machining result reflection term calculation unit 222a provides the machining result reflection term to the angle correction amount update unit 222b. The machining result reflection term calculation unit 222a may accept the auxiliary term D6, which includes the grinding wheel term and the operator term, and provide a post-update machining result reflection term, which is further corrected by the grinding wheel term and operator term, to the angle correction amount update unit 222b.

The angle correction amount update unit 222b accepts the post-update machining result reflection term and the pre-update angle correction amount D22A. The angle correction amount update unit 222b adds the post-update machining result reflection term to the pre-update angle correction amount D22A to obtain the post-update angle correction amount D22B. The angle correction amount update unit 222b outputs the post-update angle correction amount D22B.

### <Operational effect>

The method for providing the correction conditions D3 for the balance includes the process S2 of applying the pre-correction balance information D1 including the pre-correction unbalance amount and the pre-correction unbalance orientation in the work 9 to the correction condition acquisition information D2 that derives the correction conditions D3 for correcting the unbalance of the work 9 indicated by the pre-correction balance information D1 and acquiring the correction conditions D3, and processes S3 and S4 of updating the correction condition acquisition information D2 using the pre-correction balance information D1 and the post-correction balance information D4 including the post-correction unbalance amount and the post-correction unbalance orientation in the work 9 machined based on the correction conditions D3.

According to this method, the work 9 is corrected based on the correction conditions D3 obtained by the process S2 of acquiring the correction conditions D3. The post-correction balance information D4 is obtained as a result of the correction. In the processes S3 and S4 which update the correction condition acquisition information D2, the correction condition acquisition information D2 for obtaining the correction conditions D3 is updated using the post-correction balance information D4. Therefore, it is possible to reflect the effects of the correction machining in setting of the correction conditions D3 for next correction machining. As a result, a deviation between the correction conditions D3 set in the process S2 of acquiring the correction conditions D3 and an actual result of the correction machining can be reduced. Therefore, the number of works determined to be good through single balance correction machining can be increased, and thus it is possible to reduce a decrease in the first run rate.

The correction condition acquisition information D2 includes the correction curve D21 that defines a relationship between the target unbalance correction amount based on the pre-correction unbalance amount and the target machining amount D31 corresponding to the target unbalance correction amount. The processes S3 and S4 of updating the correction condition acquisition information D2 include the process S3 of updating the correction curve D21A used in the process S2 of acquiring the correction conditions D3 to the correction curve D21B in which the correction result of the work 9 is reflected by multiplying the correction curve D21A by the correction curve correction coefficient D23 obtained based on the pre-correction balance information D1 and the post-correction balance information D4. According to this process, the updated correction curve D21B can be suitably updated.

The process S3 of updating the correction curve D21 includes a process S35 of updating the pre-update correction curve correction coefficient D23A used when the correction curve D21A is obtained in the process S2 of acquiring the correction conditions D3 to the post-update correction curve correction coefficient D23B in which the correction result of the work 9 is reflected by multiplying the pre-update correction curve correction coefficient D23A by the machining result reflection coefficient based on the pre-correction balance information D1 and the post-correction balance information D4, and a process S36 of updating the correction curve used when the correction curve D21A is obtained in the process S2 of acquiring the correction conditions D3 to the correction curve D21B in which the correction result of the work 9 is reflected based on the correction conditions D3 by multiplying the correction curve by the correction curve correction coefficient D23B in which the correction result of the work 9 is reflected. This process also allows the updated correction curve D21 to be suitably updated.

The correction condition acquisition information D2 includes the target unbalance correction amount based on the pre-correction unbalance amount, and the angle correction amount D22 that corrects the target angle defining an angle at which the target unbalance correction amount is given. The processes S3 and S4 of updating the correction condition acquisition information D2 include a process S4 of updating the angle correction amount D22 that is added to the pre-correction unbalance orientation to obtain the target angle D32.. The process S4 of updating the angle correction amount D22 includes a process S44 of updating the angle correction amount D22A used when the target angle D32 is obtained in the process S2 of obtaining the correction condition D3 to the angle correction amount D22B in which the correction result of the work 9 is reflected by adding a machining result reflection term based on the pre-correction balance information D1 and the post-correction balance information D4 to the angle correction amount D22A. According to this process S4, the unbalance orientation which constitutes the unbalance information can be suitably updated.

The device 2 for providing balance correction conditions includes the correction condition acquisition unit 21 that obtains the correction conditions D3 by applying the pre-correction balance information D1, which includes the pre-correction unbalance amount and the pre-correction unbalance orientation in the work 9, to the correction condition acquisition information D2 that derives the correction conditions D3 for correcting an unbalance of the work 9 indicated by the pre-correction balance information D1, and the correction condition acquisition information update unit 22 that updates the correction condition acquisition information D2 using the pre-correction balance information D1 and the post-correction balance information D4 including the post-correction unbalance amount and the post-correction unbalance orientation of the work 9 machined based on the correction conditions D3

The device 2 for providing balance correction conditions can also reduce the deviation between the correction conditions D3 set by the correction condition acquisition unit 21 and the actual result of the correction machining. Therefore, the number of works 9 determined as good by single balance correction machining can be increased, and the decrease in the first run rate can be curbed.

The balance correction system 1 includes the balancer 4 that obtains balance information including the unbalance amount and the unbalance orientation of the work 9, the device 2 for providing balance correction conditions that receives the balance information and outputs the correction conditions D3 for correcting the unbalance in the work 9, and a machining unit 5 that receives the correction condition D3 and performs machining to correct the unbalance of the work 9. The device 2 for providing balance correction conditions includes the correction condition acquisition unit 21 that obtains a correction condition D3 by applying the pre-correction balance information D1 including the pre-correction unbalance amount and the pre-correction unbalance orientation in the work 9 to the correction condition acquisition information D2 that derives the correction conditions D3 for correcting the unbalance of the work 9 indicated by the pre-correction balance information D1, and the correction condition acquisition information update unit 22 that updates the correction condition acquisition information D2 using the pre-correction balance information D1 and the post-correction balance information D4 including the post-correction unbalance amount and the post-correction unbalance orientation of the work 9 machined based on the correction conditions D3.

The balance correction system 1 is equipped with the device 2 for providing balance correction conditions. Therefore, the number of works determined to be good through single balance correction machining can be increased, and thus the decrease in the first run rate can be curbed.

### <Modification Example 1>

The examples of the method for providing balance correction conditions, the device 2 for providing balance correction conditions, and the balance correction system 1 have been described above. The method of providing balance correction conditions, the device 2 for providing balance correction conditions and the balance correction system 1 may be implemented in various forms without being limited to the above examples.

For example, in accordance with conditions of a cutting or grinding tool, a degree of cutting and grinding may differ according to a target removal amount (a machining amount). For example, when the target removal amount is 20 mg, an actual removal amount may be 10 mg. When the target removal amount is 100 mg, the actual removal amount may be 50 mg. In such a case, when the correction curve D21 is multiplied by a uniform correction curve correction coefficient D23, the correction accuracy may be reduced.

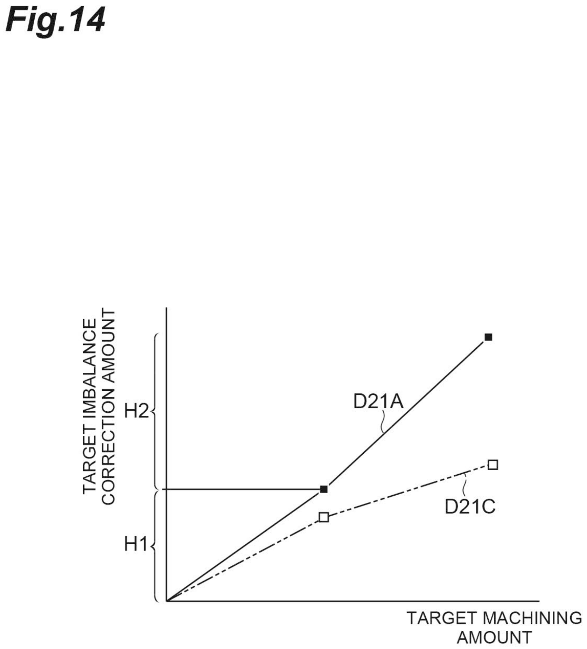

In the above embodiment, the correction curve D21 was updated by multiplying the correction curve D21 by a certain gain (the correction curve correction coefficient D23). In other words, a magnitude of the correction curve correction coefficient D23 was constant regardless of a magnitude of the target unbalance correction amount. For example, the correction curve correction coefficients D23 may be set to different values from each other according to the magnitude of the target unbalance correction amount. As shown in FIG. 14, a correction curve D21C can be obtained by making different the correction curve correction coefficient D23 when the target unbalance correction amount is in a range H1 from the correction curve correction coefficient D23 when the target unbalance correction amount is in a range H2. According to the correction curve D21C, a larger target removal amount can be set in the range H2 in which the target unbalance correction amount is larger.

In short, in the method for providing balance correction conditions, the process S3 of updating the correction curve D21 applies a first target machining amount information correction coefficient to a first target unbalance correction amount, and applies a second target machining amount information correction coefficient different from the first target machining amount information correction coefficient to a second target unbalance correction amount different from the first target unbalance correction amount. According to this process S3, good correction conditions D3 can be obtained.

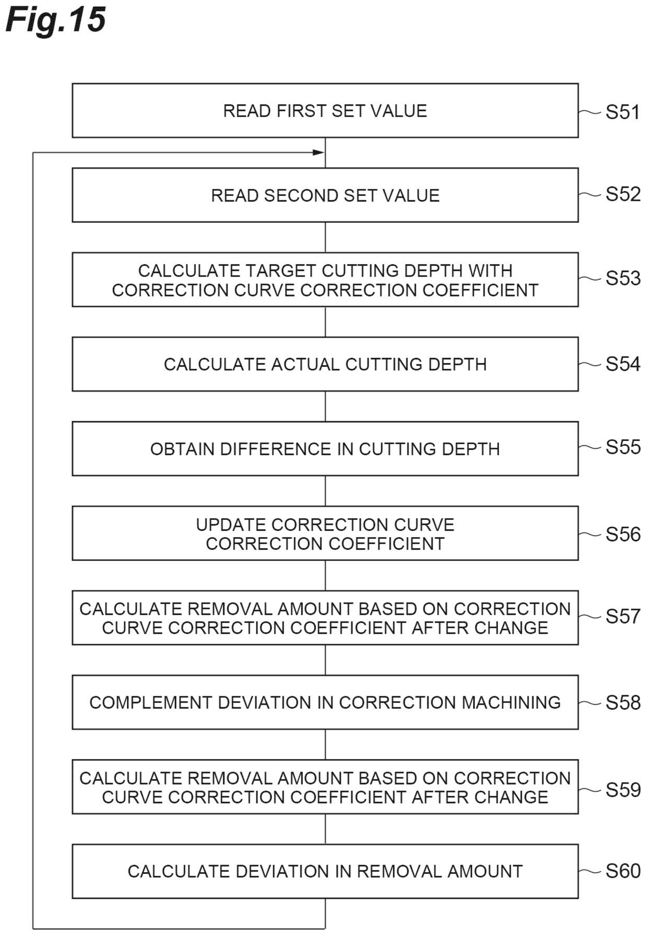

For example, a method for differentiating the correction curve correction coefficient D23 may be performed by a process shown in a flow diagram shown in FIG. 15. The process according to the flow diagram shown in FIG. 15 combines a function of calculating the difference between the target removal amount and the actual removal amount caused by the deviation in the correction machining for each of the plurality of works9 and a function of calculating the removal amount when the correction curve D21 or the correction curve correction coefficient D23 is changed. According to the process according to the flow diagram shown in FIG. 15, the actual removal amount can be predicted with a good system when the correction curve D21 and the correction curve correction coefficient D23 are changed. According to the process according to the flow diagram shown in FIG. 15, the correction curve D21 or the correction curve correction coefficient D23 is optimized so that the actual removal amount is a target magnitude.

First, a first set value is read (S51). An example of the first set value is a group of points that defines the correction curve D21. Next, a second set value is read (S52). An example of the second set value is the target removal amount, the actual removal amount, and the correction curve correction coefficient D23. The target removal amount is based on the balance information obtained by the measurement and the target overshoot amount D5. Next, a target cutting depth is calculated based on the correction curve correction coefficient D23 (S53). Next, an actual cutting depth is obtained (S54). Then, a difference in the cutting depth is obtained (S55). The difference represents a deviation in the correction machining. Next, the correction curve correction coefficient D23 is changed (S56). Next, the target cutting depth based on the correction curve correction coefficient D23 after the change is obtained by calculation (S57). Next, the deviation is complemented by correction machining (S58). The complementation may be performed by adding the deviation in the correction machining to the target cutting depth based on the changed correction curve correction coefficient D23. Next, a removal amount based on the changed correction curve correction coefficient D23 is obtained (S59). This value may be referred to as an estimated removal amount. Then, an amount of deviation of the removal amount is calculated (S60). This calculation may be performed, for example, by subtracting the actual removal amount from the target removal amount or by subtracting the removal amount based on the changed correction curve correction coefficient D23 from the target removal amount.

### Reference Signs List

1 Balance correction system
2 Device for providing balance correction conditions (Balance correction condition providing unit)
21 Correction condition acquisition unit
211 Target machining amount acquisition unit
212 Target angle acquisition unit
22 Correction condition acquisition information update unit
221 Correction curve calculation unit
221a Machining result reflection coefficient calculation unit
221b Correction curve correction coefficient calculation unit
221c Correction curve update unit
222 Angle correction amount calculation unit
222a Machining result reflection term calculation unit
222b Angle correction amount update unit
S2 Process of acquiring correction conditions
S3 Process of updating correction curve
S4 Process for updating angle correction amount
D1 Pre-correction balance information
D2 Correction condition acquisition information
D21 Correction curve
D22 Angle correction amount
D23 Correction curve correction coefficient
D3 Correction conditions
D31 Target machining amount
D32 Target angle
D4 Post-correction balance information
D5 Target overshoot amount

## Claims

1. A method for providing balance correction conditions, comprising:
a first step of applying pre-correction balance information including a pre-correction unbalance amount and a pre-correction unbalance orientation of a balance correction target to correction condition acquisition information which derives a correction condition for correcting an unbalance of the balance correction target which is indicated by the pre-correction balance information, and obtaining correction conditions; and
a step of updating the correction condition acquisition information using the pre-correction balance information and post-correction balance information including a post-correction unbalance amount and a post-correction unbalance orientation of the balance correction target machined based on the correction conditions.

2. The method for providing balance correction conditions of claim 1, wherein the correction condition acquisition information includes target machining amount information that defines a relationship between a target unbalance correction amount based on the pre-correction unbalance amount and a target machining amount corresponding to the target unbalance correction amount, and
the step of updating the correction condition acquisition information includes a step of updating the target machining amount information used in the first step to target machining amount information, in which a correction result of the balance correction target is reflected, by multiplying the target machining amount information by a target machining amount information correction coefficient obtained based on the pre-correction balance information and the post-correction balance information.

3. The method for providing balance correction conditions of claim 2, wherein the step of updating the target machining amount information includes:
a step of updating the target machining amount information correction coefficient used when the target machining amount information is obtained in the first step to a target machining amount information correction coefficient, in which a correction result of the balance correction target is reflected, by multiplying the target machining amount information correction coefficient by a machining result reflection coefficient based on the pre-correction balance information and the post-correction balance information; and
a step of updating the target machining amount information used when the target machining amount information is obtained in the first step to target machining amount information, in which a correction result of the balance correction target based on the correction conditions is reflected, by multiplying the target machining amount information by the target machining amount information correction coefficient in which the correction result of the balance correction target is reflected.

4. The method for providing balance correction conditions of claim 2, wherein the step of updating the target machining amount information applies a first target machining amount information correction coefficient to a first target unbalance correction amount, and applies a second target machining amount information correction coefficient, which is different from the first target machining amount information correction coefficient, to a second target unbalance correction amount which is different from the first target unbalance correction amount.

5. The method for providing balance correction conditions of any one of claims 1 to 4, wherein the correction condition acquisition information includes a target unbalance correction amount based on the pre-correction unbalance amount and an angle correction amount to correct a target angle that defines an angle at which the target unbalance correction amount is given,
the step of updating the correction condition acquisition information includes a step of updating the angle correction amount that is added to the pre-correction unbalance orientation to obtain the target angle, and
the step of updating the angle correction amount includes a step of updating the angle correction amount used when the target angle is obtained in the first step to an angle correction amount, in which a correction result of the balance correction target is reflected, by adding a machining result reflection term based on the pre-correction balance information and the post-correction balance information to the angle correction amount.

6. A device for providing balance correction conditions, comprising:
a correction condition acquisition unit that applies pre-correction balance information including a pre-correction unbalance amount and a pre-correction unbalance orientation of a balance correction target to correction condition acquisition information which derives a correction condition for correcting an unbalance of the balance correction target which is indicated by the pre-correction balance information, and obtains correction conditions; and
a correction condition acquisition information update unit that updates the correction condition acquisition information using the pre-correction balance information and post-correction balance information including a post-correction unbalance amount and a post-correction unbalance orientation of the balance correction target machined based on the correction conditions.

7. A balance correction system comprising:
a balance measurement unit which obtains balance information including an unbalance amount and an unbalance orientation of a balance correction target;
a balance correction condition providing unit which receives the balance information and outputs correction conditions for correcting an unbalance in the balance correction target; and
a machining unit which receives the correction conditions and performs machining to correct the unbalance of the balance correction target,
wherein the balance correction condition providing unit includes:
a correction condition acquisition unit that applies pre-correction balance information including a pre-correction unbalance amount and a pre-correction unbalance orientation of a balance correction target to correction condition acquisition information which derives a correction condition for correcting an unbalance of the balance correction target which is indicated by the pre-correction balance information, and obtains correction conditions; and
a correction condition acquisition information update unit that updates the correction condition acquisition information using the pre-correction balance information and post-correction balance information including a post-correction unbalance amount and a post-correction unbalance orientation of the balance correction target machined based on the correction conditions.
